# EUROPEAN PATENT APPLICATION

(11) **EP 2 489 713 A1**
(43) Date of publication of application: **22.08.2012**
(21) Application number: 09850432.7
(22) Date of filing: 23.11.2009
(51) Int. Cl.: C09J 117/00, C09J 11/04, C09J 11/06, E04D 11/02

(54) **NON-CURING ADHESIVE WATERPROOF MATERIAL USING RECYCLED RUBBER, AND MANUFACTURING METHOD THEREOF**

(30) Priority: 13.10.2009 KR 20090097418
(71) Applicant: Renew System Co. Ltd, Seoul 121-835 (KR)
(72) Inventor: LEE, Sang Keun, Namyangju-si Gyeonggi-do 472-872 (KR); LEE, Jong Yong, Seoul 120-012 (KR); CHO, Il Kyu, Yeoju-gun Gyeonggi-do 469-856 (KR); KIM, Jin Sung, Yeonju-gun Gyeonggi-do 469-722 (KR)
(74) Representative: Adam, Holger
(86) International application number: PCT/KR2009/006899
(87) International publication number: WO 2011/046256

(57) **Abstract**

Disclosed herein is an unvulcanized adhesive waterproof material using reclaimed rubber and a preparation method thereof, and more particularly, an unvulcanized adhesive waterproof material using reclaimed rubber and a preparation method thereof, where reclaimed rubber is added to a softener, a tackifier, a filler, an SBS resin, a PVA pressure sensitive adhesive, etc. and subjected to mechanically forced mixing to form a highly adhesive material, which is then applied on asphalt sheets, HDPE sheets, nonwoven fabric, PE foam, or the like according to the intended use purpose to form a waterproof sheet.

The unvulcanized adhesive waterproof material using reclaimed rubber includes: (a) 18 to 28 parts by weight of reclaimed rubber (EPDM- or NR-based); (b) 6 to 15 parts by weight of a softener (paraffin oil or aromatic oil); (c) 14 to 24 parts by weight of a tackifier (polybutene- or PVA-based tackifier); (d) 40 to 60 parts by weight of a filler (talc, calcium bicarbonate, or cement); and (e) 2 to 6 parts by weight of an SBS-based thermoplastic resin, the ingredients (a) to (e) being mixed together by mechanically forced mixing.

## Description

### TECHNICAL FIELD

The present invention relates to an unvulcanized adhesive waterproof material using reclaimed rubber and a preparation method thereof, and more particularly, to an unvulcanized adhesive waterproof material using reclaimed rubber and a preparation method thereof, where reclaimed rubber is added to a softener, a tackifier, a filler, an SBS resin, a PVA pressure sensitive adhesive, etc. and subjected to mechanically forced mixing to form a highly adhesive material, which is then applied on asphalt sheets, HDPE sheets, nonwoven fabric, PE foam, or the like according to the intended use purpose to form a waterproof sheet.

### BACKGROUND ART

In a convention method of using reclaimed rubber, used tires, EPDM, surgery gloves, condoms, balloons, weather stripes, or the like are subjected to physical and chemical separation to isolate rubber, which is removed of foreign materials such as fabrics, metals, etc. and pulverized by autoclave processing, milling the plasticized rubber after acid treatment, or freeze-pulverization. The chopped rubber pieces or crumb rubber thus obtained is mixed with a binder to form mats, blocks, etc. for use as a flooring material. Another conventional method of using reclaimed rubber involves isolating desired substances such as oil, carbon, etc. from reclaimed rubber. But, these methods are no more than a passive approach of using the first processing of reclaimed rubber.

Korean Patent Registration No. 0628035 discloses a composite waterproofing process using an adhesive sheet that provides a completely integrated waterproof layer structure made up of first and second waterproof layers as well as the second waterproof layer and a fixed layer, where the adhesive material of the adhesive sheet is applied on the whole side of the concrete base to make the waterproof layer structure adjustable to the movement of the concrete base, thus preventing a lift-up of the waterproof layer structure. This method provides a stable waterproof layer structure that can be attached irrespective of the condition and material of pipes or the concrete base and easily used to prevent water penetration around plastic or steel pipes.

Korean Utility Model Registration No. 0435848 describes a waterproof sheet including 8 to 23 wt.% of synthetic rubber, 4 to 20 wt .% of a tackifier, 10 to 24 wt .% of a softener and plasticizer, 30 to 70 wt .% of a filler, and 3 to 18 wt.% of a reinforcing agent, where the waterproof sheet with high adhesiveness is penetrable into fine gaps in the surface of a target material, providing a perfect waterproof function.

Korean Patent Registration No. 0834877 discloses a waterproof sheet including water-soluble polyvinyl alcohol as a principal component, and additionally an ultra-water-soluble substance, which includes at least one or two water-soluble substances selected from ionic substance (e.g., sugar, sodium chloride, etc.), sodium hydroxide, calcium chloride, surfactant, or acryl amide.

However, there is an increasing demand for an unvulcanized adhesive waterproof material using reclaimed rubber capable of maintaining rubber elasticity and surface adhesiveness for a long time, rather than the aforementioned waterproof materials having a waterproof function only.

### DISCLOSURE OF INVENTION

### TECHNICAL PROBLEM

Accordingly, it is an object of the present invention to provide an unvulcanized adhesive waterproof material using reclaimed rubber that maintains rubber elasticity and surface adhesiveness for a long time, secures a stable waterproof function pertaining to water-tightness of a waterproof layer even in the case of the movement of the building structure caused by temperature changes (thermal expansion) or the settlement of the building structure possibly occurring in concrete building structures, enhances adhesiveness of the material surface to increase the durability of the waterproof layer, and also secures high-temperature stability (drip resistance) and heat resistance, thereby contributing to the stability (durability) of the building structure.

### TECHNICAL SOLUTION

To accomplish the above object, according to an embodiment of the present invention, there is provided an unvulcanized adhesive waterproof material using reclaimed rubber that includes: (a) 18 to 28 parts by weight of reclaimed rubber (EPDM- or NR-based); (b) 6 to 15 parts by weight of a softener (paraffin oil or aromatic oil); (c) 14 to 24 parts by weight of a tackifier (polybutene- or PVA-based tackifier); (d) 40 to 60 parts by weight of a filler (talc, calcium bicarbonate, or cement); and (e) 2 to 6 parts by weight of an SBS-based thermoplastic resin, the ingredients (a) to (e) being mixed together by mechanically forced mixing.

The tackifier according to the present invention is prepared by mixing a softened PVA material, a petroleum resin having a high softening point, and polybutene at a ratio of 3:1:6 or 4:1:5.

There is also provided a method for preparing an adhesive waterproof material that includes: adding 18 to 28 parts by weight of reclaimed rubber (EPDM- or NR-based) in a mixer; adding 6 to 15 parts by weight of a softener (paraffin oil or aromatic oil) in the mixer; adding 14 to 24 parts by weight of a tackifier (polybutene- or PVA-based tackifier) in the mixer; adding 40 to 60 parts by weight of a filler (talc, calcium bicarbonate, or cement) in the mixer; adding 2 to 6 parts by weight of an SBS-based thermoplastic resin in the mixer; and mixing the ingredients together by mechanically forced mixing.

### ADVANTAGEOUS EFFECTS

The present invention provides an unvulcanized adhesive waterproof material using reclaimed rubber contrived to maintain rubber elasticity and surface adhesiveness for a long time.

The present invention secures a stable waterproof function pertaining to the water tightness of the waterproof layer even in the case of the movement of the building structure caused by thermal expansion of the concrete structure or the settlement of the structure.

The present invention enhances the surface adhesiveness to maintain adhesiveness for a long time and secures heat resistance and high-temperature stability (drip resistance) to enhance both the long-term adhesive stability of the waterproof layer and the durability of the building structure.

### BRIEF DESCRIPTION OF THE DRAWINGS

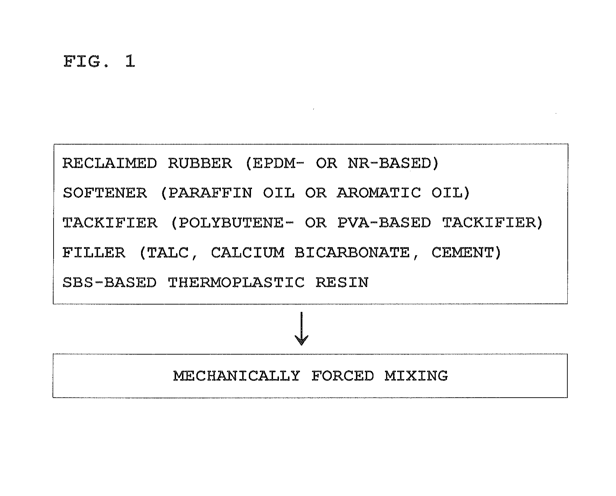

FIG. 1 is a schematic conceptual diagram showing a method for preparing an unvulcanized adhesive waterproof material using reclaimed rubber according to the present invention.

### BEST MODE FOR CARRYING OUT THE INVENTION

The present invention includes: (a) 18 to 28 parts by weight of reclaimed rubber (EPDM- or NR-based); (b) 6 to 15 parts by weight of a softener (paraffin oil or aromatic oil); (c) 14 to 24 parts by weight of a tackifier (polybutene- or PVA-based tackifier); (d) 40 to 60 parts by weight of a filler (talc, calcium bicarbonate, or cement); and (e) 2 to 6 parts by weight of an SBS-based thermoplastic resin, the ingredients (a) to (e) being mixed together by mechanically forced mixing.

Reference will be now made in detail to the preferred embodiment of the present invention with reference to the attached drawings.

The unvulcanized adhesive waterproof material using reclaimed rubber according to the present invention includes (a) 18 to 28 parts by weight of reclaimed rubber (EPDM- or NR-based); (b) 6 to 15 parts by weight of a softener (paraffin oil or aromatic oil); (c) 14 to 24 parts by weight of a tackifier (polybutene- or PVA-based tackifier); (d) 40 to 60 parts by weight of a filler (talc, calcium bicarbonate, or cement); and (e) 2 to 6 parts by weight of an SBS-based thermoplastic resin. The ingredients (a) to (e) are mixed together in a mixer of FIG. 1 by mechanically forced mixing.

More specifically, the unvulcanized adhesive waterproof material is prepared by mixing, with respect to 100 parts by weight of the material, 18 to 28 parts by weight of reclaimed rubber (EPDM- or NR-based), 6 to 15 parts by weight of paraffin oil or aromatic oil as a softener, 14 to 24 parts by weight of polybutene- or PVA-based tackifier as a tackifier, 40 to 60 parts by weight of talc, calcium bicarbonate, or cement as a filler, and 2 to 6 parts by weight of an SBS-based thermoplastic resin to provide rubber elongation, thereby maintaining rubber elasticity and surface adhesiveness for a long time.

The tackifier provides a peculiar surface adhesiveness and enables the waterproof sheet on the surface of a concrete structure to have a water-tightness on the concrete base and to be adjustable to the movement or settlement of the concrete structure caused by temperature changes (thermal expansion) possibly occurring in the concrete building structure.

The tackifier used to secure long-term adhesiveness may be prepared by mixing a softened PVA-based material, a petroleum resin having a high softening point, and polybutene at a ratio of 3:1:6 or 4:1:5 to provide high-temperature stability (drip resistance) and heat resistance, consequently with the enhanced stability of the building structure.

Hereinafter, a method for preparing an adhesive waterproof material according to the present invention will be described in detail.

The method for preparing an adhesive waterproof material according to the present invention includes: adding 18 to 28 parts by weight of reclaimed rubber (EPDM- or NR-based) in a mixer; adding 6 to 15 parts by weight of a softener (paraffin oil or aromatic oil) in the mixer; adding 14 to 24 parts by weight of a tackifier (polybutene- or PVA-based tackifier) in the mixer; adding 40 to 60 parts by weight of a filler (talc, calcium bicarbonate, or cement) in the mixer; adding 2 to 6 parts by weight of an SBS-based thermoplastic resin in the mixer; and mixing the ingredients together by mechanically forced mixing.

On the other hand, according to the present invention, the rubber elasticity and the elongation of the material depend on the added amounts of the softener and the SBS-based thermoplastic resin, while the adhesiveness and the heat resistance of the material depend on the added amounts of the tackifier, the reclaimed rubber, and the filler.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### INDUSTRIAL APPLICABILITY

The present invention provides an unvulcanized adhesive waterproof material using reclaimed rubber contrived to maintain rubber elasticity and surface adhesiveness for a long time. The present invention also provides the water-tightness of a waterproof layer to secure a stable waterproof function even in the case of the movement or settlement of the concrete structure caused by thermal expansion.

The present invention also increases surface adhesiveness to secure long-term adhesiveness and provides heat resistance and high-temperature stability (drip resistance), thereby enhancing both the long-term adhesive stability of the waterproof layer and the durability of the building structure, resulting in high industrial availability.

## Claims

1. An unvulcanized adhesive waterproof material using reclaimed rubber, comprising:
(a) 18 to 28 parts by weight of reclaimed rubber (EPDM- or NR-based);
(b) 6 to 15 parts by weight of a softener (paraffin oil or aromatic oil);
(c) 14 to 24 parts by weight of a tackifier (polybutene- or PVA-based tackifier);
(d) 40 to 60 parts by weight of a filler (talc, calcium bicarbonate, or cement); and
(e) 2 to 6 parts by weight of an SBS-based thermoplastic resin,
the ingredients (a) to (e) being mixed together by mechanically forced mixing.

2. The unvulcanized adhesive waterproof material using reclaimed rubber as claimed in claim 1, wherein the tackifier is prepared by mixing a softened PVA material, a petroleum resin having a high softening point, and polybutene at a ratio of 3:1:6 or 4:1:5.

3. A method for preparing an adhesive waterproof material, comprising:
adding 18 to 28 parts by weight of reclaimed rubber (EPDM-or NR-based) in a mixer;
adding 6 to 15 parts by weight of a softener (paraffin oil or aromatic oil) in the mixer;
adding 14 to 24 parts by weight of a tackifier (polybutene-or PVA-based tackifier) in the mixer;
adding 40 to 60 parts by weight of a filler (talc, calcium bicarbonate, or cement) in the mixer;
adding 2 to 6 parts by weight of an SBS-based thermoplastic resin in the mixer; and
mixing the ingredients together by mechanically forced mixing.
